# EUROPEAN PATENT APPLICATION

(11) **EP 1 724 671 A2**
(43) Date of publication of application: **22.11.2006**
(21) Application number: 06010203.5
(22) Date of filing: 17.05.2006
(51) Int. Cl.: G06F 3/12

(54) **Interface and print control apparatus**

(30) Priority: 17.05.2005 JP 2005144235
(71) Applicant: SHARP KABUSHIKI KAISHA, Osaka-shi, Osaka 545-8522 (JP)
(72) Inventor: Mori, Kazuo, Nara-shi Nara 630-8131 (JP)
(74) Representative: Müller - Hoffmann & Partner

(57) **Abstract**

In one embodiment of an interface that displays icons or indicators corresponding to a plurality of functions on a screen (13) and selectively points each icon or indicator on the screen (13), the interface includes a function-list display portion (35) that displays a list of each icon or indicator on the screen (13), and a set-function display portion (36) that, when an icon or indicator displayed in the list on the screen (13) by the function-list display portion (35) is selectively pointed, separate from the display by the function-list display portion (35), displays the icon or indicator that has been set on the screen (13) according to the pointed icon or indicator.

## Description

### BACKGROUND OF THE INVENTION

This application claims priority on Patent Application No. 2005-144235 filed in Japan on May 17, 2005, the entire contents of which are hereby incorporated by reference.

The present invention relates to interfaces and print control apparatuses that selectively indicate a plurality of icons or the like on a screen.

With interfaces of this type, an array of a plurality of icons is displayed on a screen of a display device, a desired icon is selectively pointed by operating a pointing device or the like, and a function such as an application that corresponds to the icon is launched.

However, in the case of a small screen, it is necessary for the plurality of icons to be arrayed without gaps, making the visibility of the icons poor and making the icon selection operation difficult.

Thus, a method is often adopted in which icons are not normally displayed, and only when a button has been depressed, a screen is displayed for setting various functions, a plurality of tabs are displayed on the screen, grouped functions are assigned to respective tabs, and when a tab is selected, the function group of this tab is displayed.

Also, for example, in JP 2003-271286A, frequency of use is calculated and stored for each individual icon, and the icons are displayed arranged in order beginning with the most frequently used icon. In this case, it is possible to preferentially display icons with a high frequency of use even if the screen is small.

However, in a conventional method as described above in which only when a button has been depressed, a screen is displayed for setting various functions, grouped functions are assigned to respective tabs, and the function group of a selected tab is displayed, when using a desired function, first, it is necessary to find the screen that displays this function, and so such a method takes time and effort. Also, more time is required when the screen that displays this function is unclear, or when the procedure for displaying this screen is not understood. On the other hand, as long as the screen is not displayed, the function is not displayed, so in some instances the existence of the function may not be known.

Also, when icons with a high frequency of use are preferentially displayed as in above JP 2003-271286A, icons with a low frequency of use are not displayed, so the frequency of use of these icons becomes less and less, and all of the icons cannot be effectively used.

Moreover, conventionally, when selecting and setting functions, selected functions and unselected functions cannot be distinguished, so functions that have been set cannot easily be recognized. Particularly, when it is necessary to set many functions, even if some of the necessary functions have not been set, this is often not recognized.

### SUMMARY OF THE INVENTION

It is an object of the present invention to provide an interface and print control apparatus that, effectively using a screen, introduces icons or indicators corresponding to a plurality of functions, and with which it is possible to easily perceive functions whose settings are complete.

The interface according to the present invention, which displays icons or indicators corresponding to a plurality of functions on a screen and selectively points each icon or indicator on the screen, includes a function-list display portion (function-list display means) that displays a list of each icon or indicator on the screen, and a set-function display portion (set-function display means) that, when an icon or indicator displayed in the list on the screen by the function-list display portion is selectively pointed, separate from the display by the function-list display portion, displays the icon or indicator that has been set on the screen according to the pointed icon or indicator.

Also, in the interface of the present invention, the function-list display portion may display each icon or indicator on the screen in order repeatedly.

Further, in the interface of the present invention, the function-list display portion may display each icon or indicator displayed on the screen in a scrolling manner.

Also, in the interface of the present invention, a configuration may be adopted in which respective values that indicate the content of the function of each icon or indicator are managed, and when an icon or indicator is displayed on the screen by the set-function display portion, a value that indicates the content of the function of the displayed icon or indicator is set as an input value.

Further, in the interface of the present invention, a configuration may be adopted in which when deletion of an icon or indicator displayed on the screen by the set-function display portion is pointed, the input value that indicates the content of the function of the pointed icon or indicator is voided.

Also, in the interface of the present invention, a configuration may be adopted in which when modification of the value that indicates the content of the function of an icon or indicator displayed on the screen by the set-function display portion is pointed, the input value that indicates the content of the pointed function is modified.

Further, in the interface of the present invention, a configuration may be adopted in which an unselected value before display by the set-function display portion and a selected default value after display by the set-function display portion are managed as respective values that indicate the content of the function of each icon or indicator.

Also, in the interface of the present invention, a configuration may be adopted in which the default values that indicate the content of the functions of icons or indicators are managed, and when modification of the default value that indicates the content of the function of the icon or indicator is pointed, the default value is modified.

Further, in the interface of the present invention, a configuration may be adopted in which when an icon or indicator is displayed on the screen by the set-function display portion in response to a prescribed input operation, the default value that indicates the content of the function of the displayed icon or indicator is set as the input value.

Also, in the interface of the present invention, a configuration may be adopted in which regardless of whether or not an icon or indicator has been displayed on the screen by the set-function display portion, the default value that indicates the content of the function of a prescribed icon or indicator is always set as the input value.

Further, in the interface of the present invention, a configuration may also be adopted in which the set-function display portion switches the displayed form of icons or indicators displayed on the screen.

Also, in the interface of the present invention, a configuration may also be adopted in which an icon or indicator displayed on the screen by the function-list display portion is a moving image, and an icon or indicator displayed on the screen by the set-function display portion is a still image configured from one frame of the moving image.

Further, in the interface of the present invention, a configuration may be adopted in which an icon or indicator displayed on the screen by the function-list display portion is a moving image, and an icon or indicator displayed on the screen by the set-function display portion is a still image configured by combining a plurality of frames of the moving image.

On the other hand, the print control apparatus of the present invention, which displays icons or indicators corresponding to a plurality of print functions on a screen and selectively points each icon or indicator on the screen, includes a function-list display portion (function-list display means) that displays a list of each icon or indicator on the screen, and a set-function display portion (set-function display means) that, when an icon or indicator displayed in the list on the screen by the function-list display portion is selectively pointed, separate from the display by the function-list display portion, displays the icon or indicator that has been set on the screen according to the pointed icon or indicator.

Also, in the print control apparatus of the present invention, a configuration may be adopted in which printing is pointed using print functions corresponding to icons or indicators displayed on the screen by the set-function display portion.

With this sort of interface according to the present invention, the function-list display portion displays a list of icons or indicators corresponding to a plurality of functions on the screen. Thus, a user can immediately view many icons or indicators, and can know their functions, and can know of their existence whether or not the icons or indicators have been used. Also, the set-function display portion, when an icon or indicator displayed in the list are selectively pointed, separate from the function-list display, displays the icon or indicator that has been set on the screen according to the pointed icon or indicator. Thus, icons or indicators that have been set can easily be known.

The icons are marks designed such that the content of each type of function can be intuitively understood. Moreover, the indicators mentioned here include symbols, codes, character strings, and so on printed such that the content of each type of function can be easily understood.

To display a list of icons or indicators on the screen, the function-list display portion may display each icon or indicator on the screen in order repeatedly. For example, the icons or indicators are alternately displayed, repeatedly displaying a fixed number of the icons or indicators in order. Alternatively, each icon or indicator may be displayed in a scrolling manner. Thus, it is possible to see all of the icons or indicators, so icons whose existence is not known are not produced.

Also, according to one embodiment of the present invention, respective values that indicate the content of the function of each icon or indicator are managed, and when an icon or indicator is displayed, a value that indicates the content of the function of the displayed icon or indicator is set as an input value. For example, when the function of an icon or indicator is a function that rotates an image, and a value that indicates the content of this function indicates a rotation angle of either 90 degrees or 180 degrees, a value that indicates a rotation angle of either 90 degrees or 180 degrees is set as an input value.

When deletion of an icon or indicator displayed on the screen by the set-function display portion is pointed, the input value that indicates the content of the function of the pointed icon or indicator is voided. Also, when modification of the value that indicates the content of the function of an icon or indicator displayed on the screen by the set-function display portion is pointed, the input value that indicates the content of the pointed function is modified. Thus, even after the icon or indicator has been selected and set, it is possible to easily modify the content of settings.

Further, according to another embodiment of the present invention, an unselected value before display by the set-function display portion and a selected default value after display by the set-function display portion are managed as values that indicate the content of the function of each icon or indicator. Thus, when an icon or indicator has been selected, the default value that expresses the content of the function of the icon or indicator can be set as the input value, and it is possible to achieve simplification of the input operation.

Also, because the default value can be modified, a desired default value can be set.

Further, in response to a prescribed input operation, the default value that indicates the content of the function of the displayed icon or indicator is set as the input value only by an icon or indicator being displayed on the screen.

Also, regardless of whether or not an icon or indicator has been displayed on the screen by the set-function display portion, the default value that indicates the content of the function of a prescribed icon or indicator is always set as the input value, and so it is not necessary to perform pointing of the prescribed icon or indicator or setting of the input value, and the input operation can be greatly simplified. The prescribed icon or indicator corresponds to a function that should definitely be used.

Further, according to still another embodiment of the present invention, it is possible for the set-function display portion to switch the displayed form of icons or indicators displayed on the screen, so the user can select a desired display form that is easily identified.

Also, according to still another embodiment of the present invention, an icon or indicator displayed on the screen by the function-list display portion is a moving image, and an icon or indicator displayed on the screen by the set-function display portion is a still image configured from one frame of the moving image or a still image configured by combining a plurality of frames of the moving image. In this case, the icons or indicators displayed by the function-list display portion are moving images, so it is possible to clearly inform the user of the functions of the icons or indicators. The icons or indicators displayed by the set-function display portion have already been selectively pointed, and so it is not necessary to clearly inform the user of the functions of the icons or indicators, and thus by displaying still images, reduction in the amount of processing for the display control is achieved. Also, because at least one frame of the moving image is used, the relationship between the still image and the moving image is obvious.

On the other hand, in another print control apparatus according to the present invention as well, icons or indicators corresponding to a plurality of print functions are displayed in a list on a screen. Thus, a user can immediately view many icons or indicators, and can know their print functions, and can know of their existence whether or not the icons or indicators have been used. Also, when an icon or indicator displayed in the list is selectively pointed, separate from the function-list display, the icon or indicator that has been set is displayed on the screen according to the pointed icon or indicator. Thus, print functions that have been set can easily be known.

Also, because printing is pointed using print functions corresponding to icons or indicators displayed on the screen by the set-function display portion, printing can be executed after the print functions that have been set are easily and reliably understood. Also, print function selection as well as processing from setting to execution can quickly and reliably be performed.

### BRIEF DESCRIPTION OF DRAWINGS

FIG. 1 is a block diagram showing an embodiment of a print control apparatus according to the present invention.

FIG. 2 is a functional block diagram showing the configuration of an application for realizing the functions of a printer driver and an interface in the print control apparatus in FIG. 1.

FIG. 3 is a diagram showing an example of a function table of a setting information storage portion in the print control apparatus in FIG. 1.

FIG. 4 is a diagram showing an example of an icon and character string table of the setting information storage portion in the print control apparatus in FIG. 1.

FIG. 5 is a diagram showing an example of an icon still image table of the setting information storage portion in the print control apparatus in FIG. 1.

FIG. 6 is a diagram showing an example of a display status table of a function prescribed value holding portion in the print control apparatus in FIG. 1.

FIG. 7 is a diagram showing an example of a function restriction table of the function prescribed value holding portion in the print control apparatus in FIG. 1.

FIG. 8 is a diagram showing an example of a window displayed in a display device in the print control apparatus in FIG. 1.

FIG. 9 is a diagram showing updated display content of the window in FIG. 8.

FIG. 10 is flowchart showing a display control for displaying a character string or an icon in a set-function display region in the print control apparatus in FIG. 1.

FIG. 11 is a diagram showing another example of a window displayed on the display device in the print control apparatus in FIG. 1.

FIG. 12 is a flowchart showing a display control for performing cancellation or modification of an icon or a character string in the set-function display region in the print control apparatus in FIG. 1.

FIG. 13 is a diagram showing another example of a window displayed on the display device in the print control apparatus in FIG. 1.

FIG. 14 is a diagram showing updated display content of the window in FIG. 9.

FIG. 15 is a diagram showing still another example of a window displayed on the display device in the print control apparatus in FIG. 1.

FIG. 16 is a flowchart showing a display control for selecting which of the icons or character strings to display in the set-function display region in the print control apparatus in FIG. 1.

FIG. 17 is a diagram showing still another example of a window displayed on the display device in the print control apparatus in FIG. 1.

FIG. 18 is a flowchart showing a control for executing print processing in the print control apparatus in FIG. 1.

FIGS. 19(a) to 19(c) are diagrams showing how a print function icon in a function-list display region is moved to the set-function display region with a drag-and-drop operation.

FIG. 20(a) is a diagram showing how each frame of a moving image of an icon changes in sync with movement of the icon, and FIG. 20(b) is a diagram showing a fourth frame that has been extracted as a still image of the icon.

FIG. 21(a) is a diagram showing how each frame of a moving image of an icon changes in sync with movement of the icon, and FIG. 21(b) is a diagram showing a first frame and a fourth frame that have been extracted as a still image of the icon.

### DESCRIPTION OF THE PREFERRED EMBODIMENTS

Below follows a detailed description of embodiments of the present invention with reference to the accompanying figures.

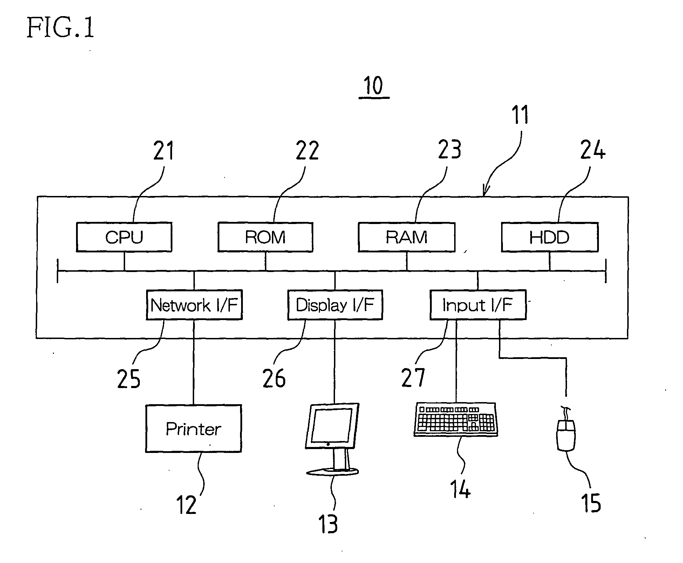

FIG. 1 is a block diagram showing an embodiment of a print control apparatus according to the present invention. A print control apparatus 10 is configured from a personal computer 11, a printer 12, a display device 13, and a keyboard 14 and a pointing device (for example, a mouse) 15 or the like.

The personal computer 11 is provided with a CPU (central processing unit) 21 that centrally controls the computer 11, a ROM 22 that stores various types of programs and data, a RAM 23 that temporarily stores various types of data and for being used as a work area, an HDD (hard disk drive) 24 that stores various types of programs and data, a network interface portion 25 that is connected to the printer 12 via a network, a display interface portion 26 that is connected to the display device 13, an input interface portion 27 which is connected to the keyboard 14 and the pointing device 15, and so on.

The CPU 21 reads an operating system OS, an application, and the like from the HDD 24, executes the application on the basis of the operating system OS, controls the printer 12 via the network interface portion 25, controls display of the display device 13 via the display interface portion 26, and inputs data and instructions from the keyboard 14, the pointing device 15 and the like via the input interface portion 27, thus realizing the functions of a driver and also an interface for the printer 12.

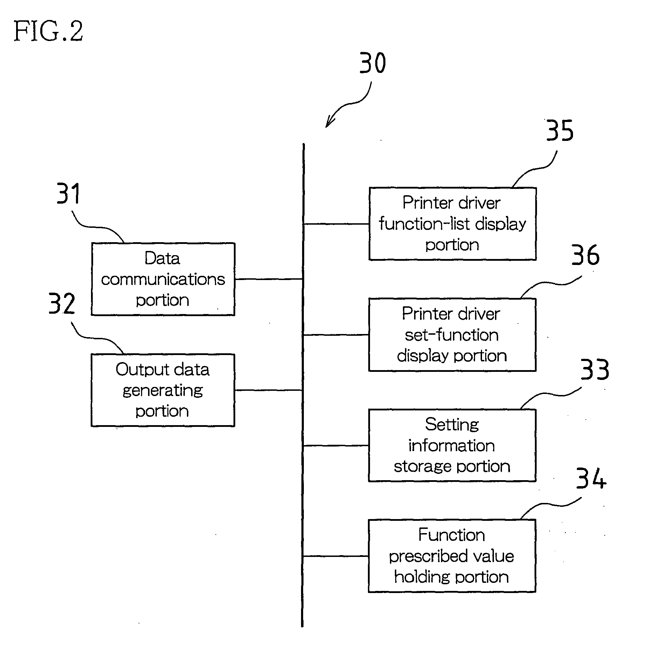

FIG. 2 is a functional block diagram showing the configuration of an application for realizing the functions of a printer driver and an interface for the printer 12. This application 30 is read out from the HDD 24 and executed by the CPU 21, and realizes those functions.

The application 30 includes a data communications portion 31, an output data generating portion 32, a setting information storage portion 33, a function prescribed value holding portion 34, a printer driver function-list display portion 35, a printer driver set-function display portion 36, and the like.

The data communications portion 31 performs data communications with other applications. For example, it receives document data to be printed from a document creation application, and receives data and instructions input with the keyboard 14 or the pointing device 15 from an operating input control application.

The output data generating portion 32 creates print data that can be interpreted in the printer 12 and outputs this print data from the network interface portion 25 to the printer 12 via the network, and converts document data and image data to print data that can be interpreted in the printer 12 and outputs the print data.

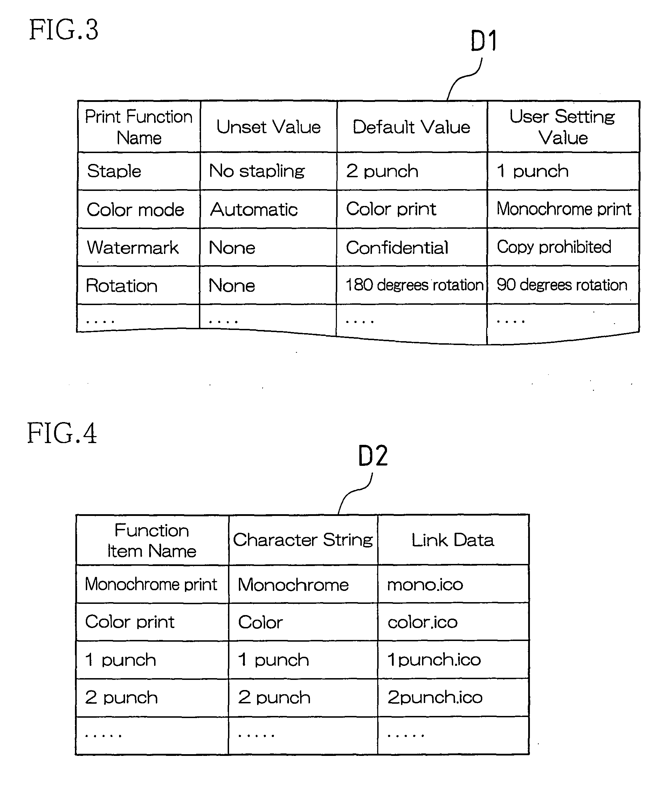

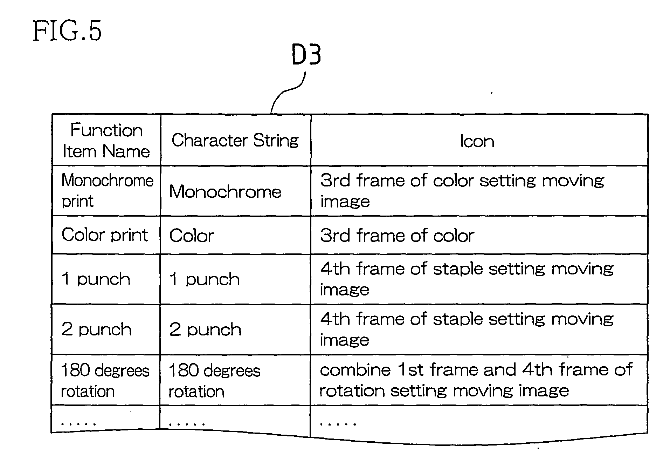

The setting information storage portion 33 stores a function table D1 as shown in FIG. 3, an icon and character string table D2 as shown in FIG. 4, and an icon still image table D3 as shown in FIG. 5.

In the function table D1 in FIG. 3, print function names and respective values (unset values, default values, and user setting values) that indicate the content of the print functions are stored in association. For example, the unset value "No stapling", the default value "2 punch", and the user setting value "1 punch" are stored associated with the print function "Staple". Also, the unset value "Automatic", the default value "Color print", and the user setting value "Monochrome print" are stored associated with the print function "Color mode".

The user setting value is pointed together with the print function name by an input operation with the keyboard 14 or the pointing device 15, and communicated to the setting information storage portion 33 via the data communications portion 31, and stored associated with the print function name in the function table D1 in the setting information storage portion 33.

Also, the default value is stored in advance associated with the print function name in the function table D1. When modifying the default value of the function table D1, the default value and the print function name are pointed by an operation with the keyboard 14 or the pointing device 15, the default value and the print function name are communicated to the setting information storage portion 33 via the data communications portion 31, and the default value that corresponds to the print function name is updated to the communicated default value in the setting information storage portion 33.

In the icon and character string table D2 in FIG. 4, function item names belonging to print functions, character strings that express the function items, and link data to icons that express the function items are stored in association. For example, a function item character string "Monochrome" and link data "mono.ico" to the function item icon are stored associated with a function item "Monochrome print" that belongs to a print function "Color mode". Also, a function item character string "Color" and link data "color.ico" to the function item icon are stored associated with another function item "Color print" that belongs to the print function "Color mode". On the other hand, a function item character string "1 punch" and link data "1punch.ico" to the function item icon are stored associated with a function item "1 punch" that belongs to a print function "Staple". Also, a function item character string "2 punch" and link data "2punch.ico" to the function item icon are stored associated with a function item "2 punch" that belongs to the print function "Staple".

In the icon still image table D3 in FIG. 5, only data for moving image icons are stored. The function item names, the character strings that express the function items, and configuration methods of still image icons that express the function items are stored in association. For example, a function item character string "1 punch" and a function item still image icon configuration method "4th frame of staple setting moving image", i.e., that the fourth frame of the moving image icon is used, are stored associated with the function item "1 punch". Also, a function item character string "180 degrees rotation" and a function item still image icon configuration method "combine 1st frame and 4th frame of rotation setting moving image", i.e., that the first frame and the fourth frame of the moving image icon are used combined together, are stored associated with the function item "180 degrees rotation" that belongs to the print function.

The default value and the user setting value in the function table D1 in FIG. 3 correspond to the function items in the icon and character string table D2 in FIG. 4 and the icon still image table D3 in FIG. 5.

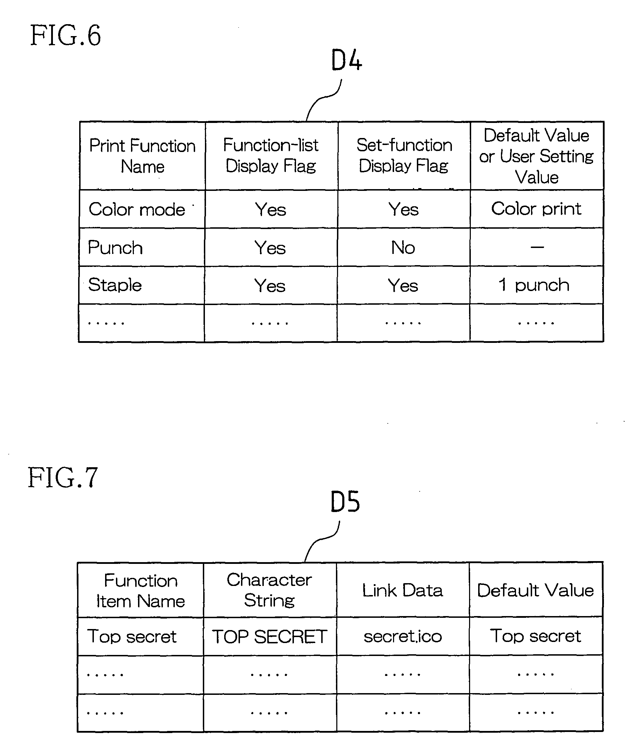

The function prescribed value holding portion 34 stores a display status table D4 as shown in FIG. 6 and a function restriction table D5 as shown in FIG. 7.

In the display status table D4 in FIG. 6, print function names, function-list display flags that indicate whether or not icons or character strings are displayed by the printer driver function-list display portion 35, and set-function display flags that indicate whether or not icons or character strings are displayed by the printer driver set-function display portion 36 are stored in association, and when the set-function display flags are "Yes", the default values or the user setting values are also stored in association. For example, the function-list display flag "Yes" indicating that an icon or character string is displayed by the printer driver function-list display portion 35, and the set-function display flag "Yes" indicating that an icon or character string is displayed by the printer driver set-function display portion 36, are stored in association with the print function "Color mode", and because the set-function display flag is "Yes", the default value is stored in association. Also, the function-list display flag "Yes" indicating that an icon or character string is displayed by the printer driver function-list display portion 35, and the set-function display flag "No" indicating that an icon or character string is not displayed by the printer driver set-function display portion 36, are stored in association with a print function "Punch", and because the set-function display flag is "No", neither the default value or the user setting value are stored in association.

In the function restriction table D5 in FIG. 7, function item names that are always set, character strings that express the function items, link data to icons that express the function items, and default values are stored in association. For example, a function item "Top secret", a function item character string "TOP SECRET", and link data "secret.ico" to the function item icon are stored in association with the default value.

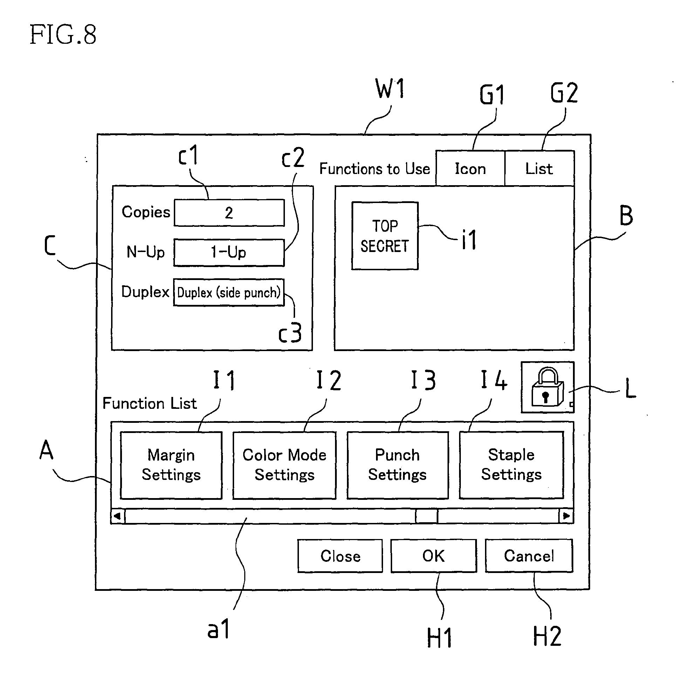

The printer driver function-list display portion 35, referring to the display status table D4 in FIG. 6 in the function prescribed value holding portion 34, reads all of the print function names whose function-list display flags are "Yes", reads the respective icons that correspond to these print functions from the HDD 24, and performs display control for displaying a list of these icons on the screen of the display device 13 via the display interface portion 26. For example, it displays a window W1 as shown in FIG. 8 on the screen of the display device 13, and displays icons I1, I2, and so on in a function-list display region A of the window W1.

When a scroll portion a1 of the function-list display region A has been operated by an input operation of, for example, the keyboard 14 or the pointing device 15, the content of this operation is communicated to the printer driver function-list display portion 35 via the data communications portion 31. In response, the printer driver function-list display portion 35 scrolls the display of the icons I1, I2, and so on in the function-list display region A. With this display scrolling, all of the icons I1, I2, and so on are displayed in order.

The printer driver set-function display portion 36, referring to the function restriction table D5 in FIG. 7 in the function prescribed value holding portion 34, reads character strings or link data to icons that correspond to the function items stored in the function restriction table D5, and displays character strings or icons obtained from the link data in a set-function display region B of the window W1 in FIG. 8.

Also, when an icon in the function-list display region A is selected by an input operation with the keyboard 14 or the pointing device 15, the selected icon is communicated to the printer driver set-function display portion 36 via the data communications portion 31. When the selected icon is communicated, the printer driver set-function display portion 36, referring to the function table D1 in FIG. 3 in the setting information storage portion 33, reads the default value or the user setting value of the print function that corresponds to the selected icon. Further, referring to the icon and character string table D2 in FIG. 4 in the setting information storage portion 33, the printer driver set-function display portion 36 reads the character string or the link data to icon that corresponds to the default value or user setting value (function item) that has been read, and performs a display control for displaying the character string or the icon obtained from the link data on the display of the display device 13 via the display interface portion 26.

Also, when displaying a character string or an icon in the set-function display region B, the printer driver set-function display portion 36, referring to the display status table D4 in FIG. 6 in the function prescribed value holding portion 34, sets the set-function display flag corresponding to the print function to which the function name of the displayed character string or icon belongs to "Yes", and stores the function item (the default value or the user setting value) of the displayed character string or icon.

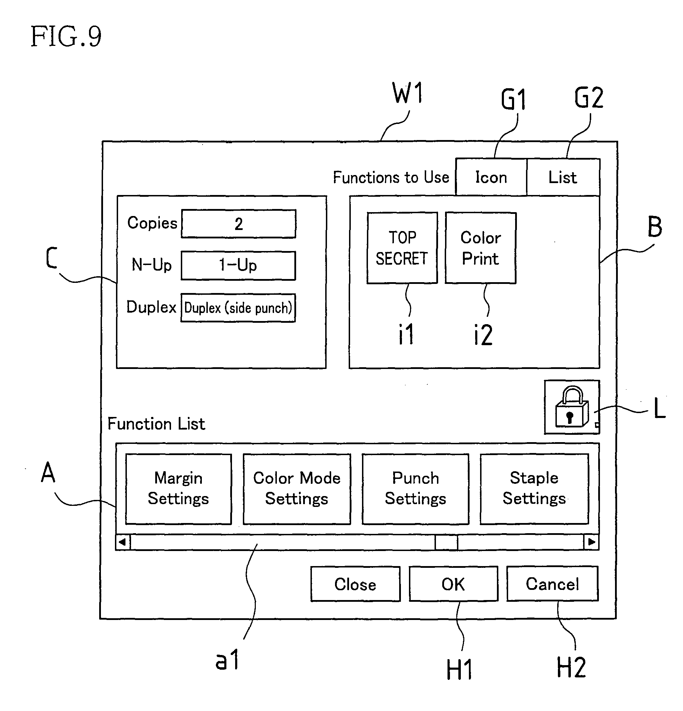

Thus, as shown in FIG. 9, for example, the icons il, i2, and so on are displayed in the set-function display region B of the window W1.

In the print control apparatus 10 of the present embodiment, when the application 30 is launched, first, the window W1 as shown for example in FIG. 8 is displayed on the screen of the display device 13, and the function-list display region A and the set-function display region B and the like are displayed in the window W1. Then, all of the print function names with "Yes" function-list display flags in the display status table D4 in FIG. 6 are read by the printer driver function-list display portion 35, and a list of the respective icons that correspond to these print functions is displayed in the function-list display region A. Also, immediately after the application 30 is launched, because selection of an icon in the function-list display region A by an input operation with the keyboard 14 or the pointing device 15 has not been performed, only character strings or icons corresponding to the function items in the function restriction table D5 in FIG. 7 are displayed in the set-function display region B.

Afterward, when an icon in the function-list display region A is selected with an input operation with the keyboard 14 or the pointing device 15, the default value or the user setting value of the print function that corresponds to the selected icon in the function table D1 in FIG. 3 and the character string or the link data to the icon that corresponds to the read default data or user settings data (function item) in the icon and character string table D2 in FIG. 4 are read by the printer driver set-function display portion 36, and as shown in FIG. 9, the character string or icon obtained from the link data is displayed in the set-function display region B. Then, each time that an icon in the function-list display region A is selected by an input operation with the keyboard 14 or the pointing device 15, the same processing is performed, increasing the number of character strings or icons displayed in the set-function display region B.

A normal settings region C is also displayed in the window W1. Entry spaces for the content of each function item, for setting the content of print functions that are very frequently used, are displayed in this normal settings region C. For example, an entry space c1 for the number of print copies, an entry space c2 for the number of pages to be laid out on one page of printing paper, and an entry space c3 for duplex printing are displayed. Respective values are entered in these entry spaces c1, c2, and c3 by input operations with the keyboard 14 or the pointing device 15.

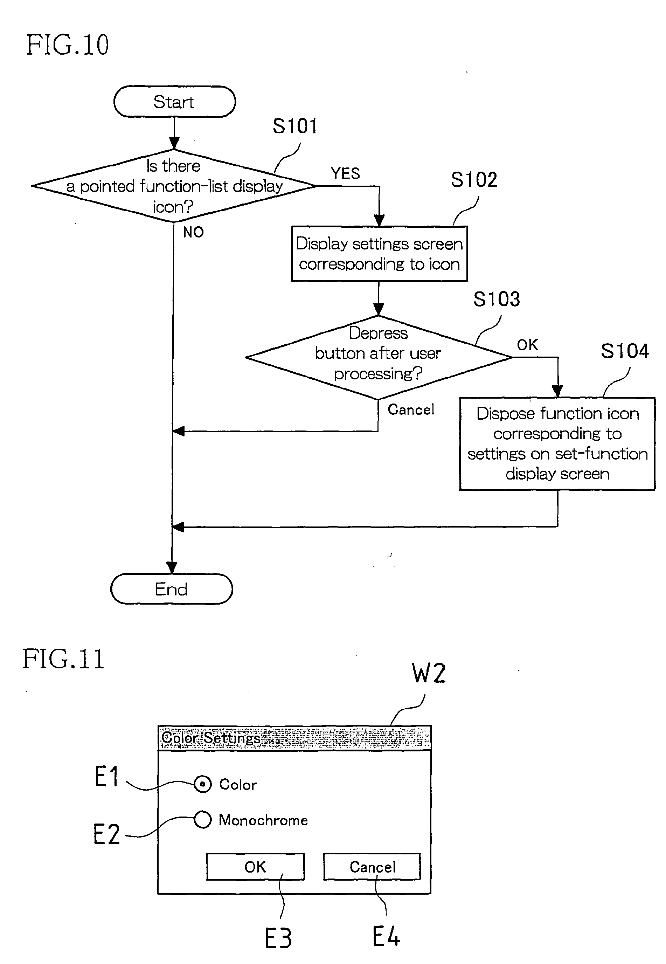

Following is a detailed description of the display control performed by the printer driver set-function display portion 36 for displaying a character string or an icon in the set-function display region B, with reference to the flowchart in FIG. 10.

First, the printer driver set-function display portion 36 waits for selection of an icon in the function-list display region A by an input operation with the keyboard 14 or the pointing device 15 (Step S101). At this time, when an icon in the function-list display region A is selected and pointed by an input operation with the keyboard 14 or the pointing device 15, the icon in the function-list display region A that has been pointed is communicated to the printer driver set-function display portion 36 via the data communications portion 31. The printer driver set-function display portion 36, when the icon in the function-list display region A that has been pointed is communicated ("Yes" in Step S101), reads a window for setting the print function of the icon in the function-list display region A that was pointed to from the HDD 24, and displays this window on the display device 13 (Step S102).

For example, when the icon I2 for the print function "Color mode" in the function-list display region A is pointed by an input operation in the window W1 in FIG. 8, a window W2 for setting the print function is displayed on the display device 13. In this window W2, radio buttons E1 and E2 for each function item "Color print" and "Monochrome print" belonging to the print function "Color mode" are displayed. Also, an OK button E3 and a cancel button E4 are displayed.

In the window W2 in FIG. 11, when, for example, the radio button E1 for the function item "Color print" is selected, and the OK button E3 is pointed ("OK" in Step S103), the function item "Color print" is communicated to the printer driver set-function display portion 36 via the data communications portion 31. The printer driver set-function display portion 36, when the function item "Color print" is communicated, referring to the icon and character string table D2 in FIG. 4, reads the link data to the icon corresponding to the function item "Color print", and as shown in FIG. 9, displays the icon i2 obtained from the link data in the set-function display region B (Step S104). Alternatively, the printer driver set-function display portion 36, referring to the icon and character string table D2 in FIG. 4, reads the character string corresponding to the function item "Color print", and displays the read character string in the set-function display region B (Step S104).

Also, in the window W2 in FIG. 11, when the radio button E2 for the function item "Monochrome print" is selected, and the OK button E3 is pointed ("OK" in Step S103), the character string or the icon link data corresponding to the function item "Monochrome print" are read, and the character string or the icon obtained from the link data is displayed in the set-function display region B (Step S104).

Further, the printer driver set-function display portion 36, when displaying the character string or the icon in the set-function display region B, referring to the display status table D4 in FIG. 6, sets the set-function display flag corresponding to the print function to which the function item of the displayed icon belongs to "Yes", and further, associated with the print function, stores the function item "Color print" or the function item "Monochrome print" (the default value or the user setting value) of the displayed icon.

Also, in the window W2 in FIG. 11, regardless of whether or not the radio button E1 and E2 for each function item have been selected by an input operation with the keyboard 14 or the pointing device 15, when the cancel button E4 is pointed ("Cancel" in Step S103), the display control is interrupted and the window W2 in FIG. 11 is erased.

This sort of display control by the printer driver set-function display portion 36 is performed each time that an icon in the function-list display region A is pointed by an input operation with the keyboard 14 or the pointing device 15, increasing the number of icons displayed in the set-function display region B.

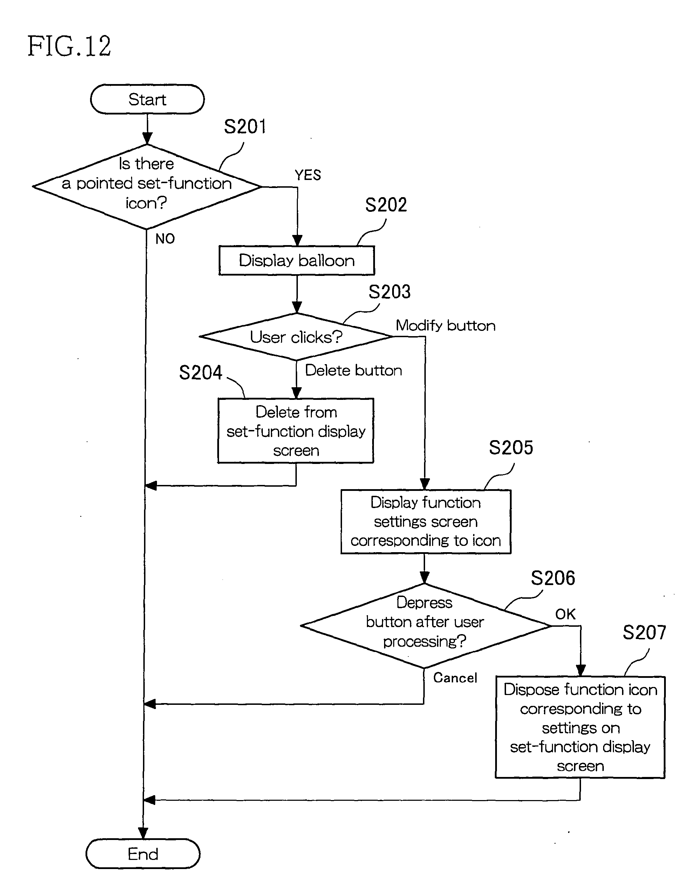

Following is a detailed description of the display control performed by the printer driver set-function display portion 36 for performing cancellation or modification of an icon or a character string in the set-function display region B, with reference to the flow chart in FIG. 12.

In a state with the icons or the character strings of function items displayed in the set-function display region B, the icons or character strings can be cancelled or modified.

First, when an icon or a character string in the set-function display region B is pointed by an input operation with the keyboard 14 or the pointing device 15, the selected icon or character string is communicated to the printer driver set-function display portion 36 via the data communications portion 31. The printer driver set-function display portion 36, when the icon or character string in the set-function display region B is communicated ("Yes" in Step S201), reads a balloon window for canceling or modifying the icon or character string from the HDD 24, and displays the balloon window on the display device 13 (Step S202).

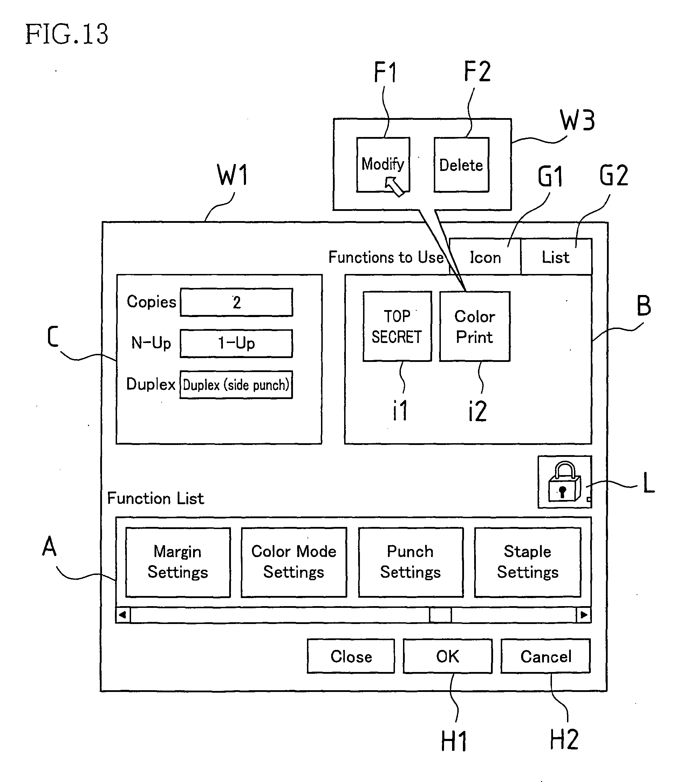

For example, in the window W1 in FIG. 9, when the icon i2 in the set-function display region B is pointed by an input operation, a balloon window W3 for the icon i2 as shown in FIG. 13 is displayed on the display device 13. In this balloon window W3, a modify button F1 and a delete button F2 are displayed.

In the balloon window W3 for the icon i2 in FIG. 13, when, for example, the delete button F2 is selected and pointed by an input operation with the keyboard 14 or the pointing device 15 ("Delete button" in Step S203), the printer driver set-function display portion 36 deletes the icon i2 in the set-function display region B. Also, referring to the display status table D4 in FIG. 6, the printer driver set-function display portion 36 deletes the function item (the default value or the user setting value) for the deleted icon, and sets the set-function display flag corresponding to the function item for the deleted icon to "No" (Step S204).

Also, in the balloon window W3 for the icon i2 in FIG. 13, when the modify button F1 is selected and pointed by an input operation with the keyboard 14 or the pointing device 15 ("Modify button" in Step S203), the printer driver set-function display portion 36 reads a window for setting the print function for the icon i2 from the HDD 24, and displays the window on the display device 13 (Step S205).

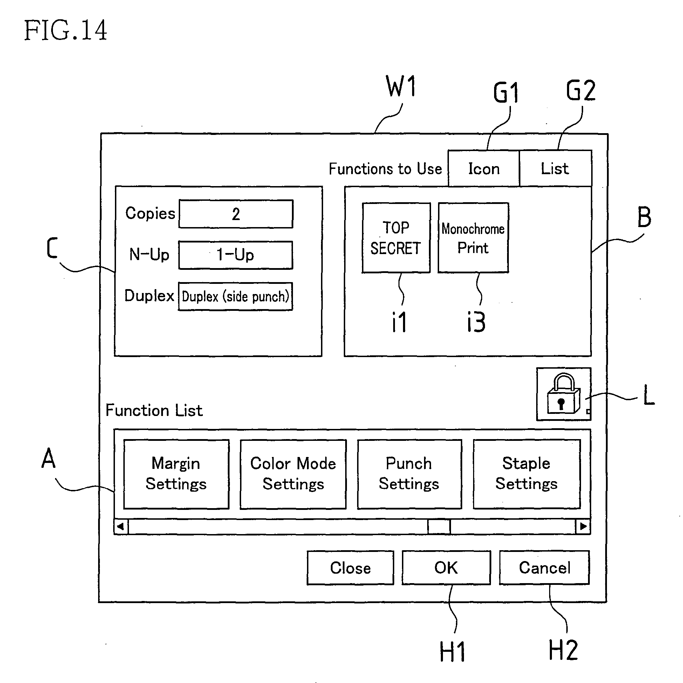

For example, the window W2 in FIG. 11 is displayed on the display device 13 as a window for setting the print function for the icon i2. Then, in the window W2 in FIG. 11, when, for example, the radio button E2 for the function item "Monochrome print" is selected and the OK button E3 is pointed ("OK" in Step S206), the printer driver set-function display portion 36, referring to the icon and character string table D2 in FIG. 4, reads the link data to the icon corresponding to the function item "Monochrome print", and, as shown in FIG. 14, displays the icon i3 obtained from the read link data in the set-function display region B. Alternatively, the printer driver set-function display portion 36, referring to the icon and character string table D2 in FIG. 4, reads the character string corresponding to the function item "Monochrome print", and displays the read character string in the set-function display region B. Then, referring to the display status table D4 in FIG. 6, the printer driver set-function display portion 36 stores the function item "Monochrome print" (the user setting value) in association with the print function to which the function item "Monochrome print" belongs (Step S207). Not only the function item "Monochrome print", but also the other function item "Color print", belongs to this print function, and because the function item "Color print" (the default value) is stored in association with this print function, after this default value is erased, the user setting value becomes stored.

Also, in the window W2 in FIG. 11, regardless of whether or not the radio buttons E1 and E2 for each function item have been pointed by an input operation with the keyboard 14 or the pointing device 15, when the cancel button E4 is pointed ("Cancel" in Step S206), the display control is interrupted and the window W2 in FIG. 11 is erased.

On the other hand, separate from the display control in FIGS. 10 and 12, the printer driver set-function display portion 36, referring to the function restriction table D5 in FIG. 7, reads the character strings or the link data to the icons for function items, and displays these character strings or the icons obtained from the link data in the set-function display region B. These character strings or the icons have been set as restriction items of the print functions by an administrator, for example, and are referred to as function restriction character strings or function restriction icons.

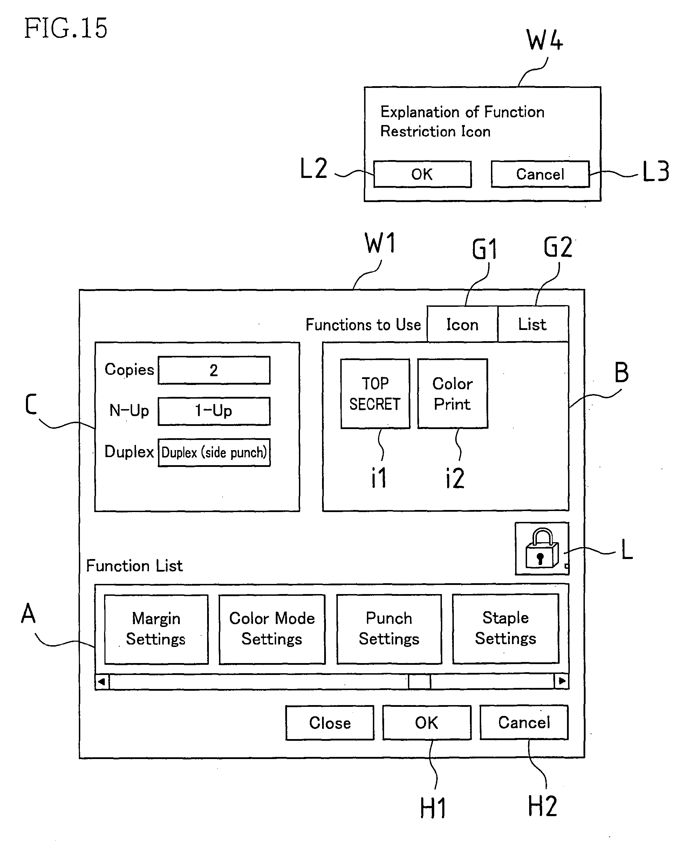

Also, when a lock button L below the set-function display region B is pointed by an input operation with the keyboard 14 or the pointing device 15, the lock button L is communicated to the printer driver set-function display portion 36 via the data communications portion 31. The printer driver set-function display portion 36, when the lock button L is communicated, reads a window for setting whether or not to display a function restriction character string or a function restriction icon from the HDD 24, and displays this window on the display device 13. For example, the printer driver set-function display portion 36 displays a window W4 as shown in FIG. 15. In this window W4, an explanation of a function restriction character string or a function restriction icon, an OK button L2, and a cancel button L3 are displayed.

Then, in the window W4 in FIG. 15, when the OK button L2 is pointed by an input operation with the keyboard 14 or the pointing device 15, the printer driver set-function display portion 36, referring to the function restriction table D5, reads the character string or the link data to the icon for the function item, and displays the character string or the icon obtained from the link data in the set-function display region B as a function restriction character string or a function restriction icon. For example, the printer driver set-function display portion 36 displays the icon i1 for the function item "Top secret" in the set-function display region B.

Also, in the window W4 in FIG. 15, when the cancel button L3 is pointed by an input operation with the keyboard 14 or the pointing device 15, the printer driver set-function display portion 36 erases the function restriction character string or the function restriction icon displayed in the set-function display region B. For example, the printer driver set-function display portion 36 erases the icon i1 for the function item "Top secret".

However, even if the function restriction character string or the function restriction icon displayed in the set-function display region B is erased, the default value corresponding to the character string or the link data in the function restriction table D5 is not erased.

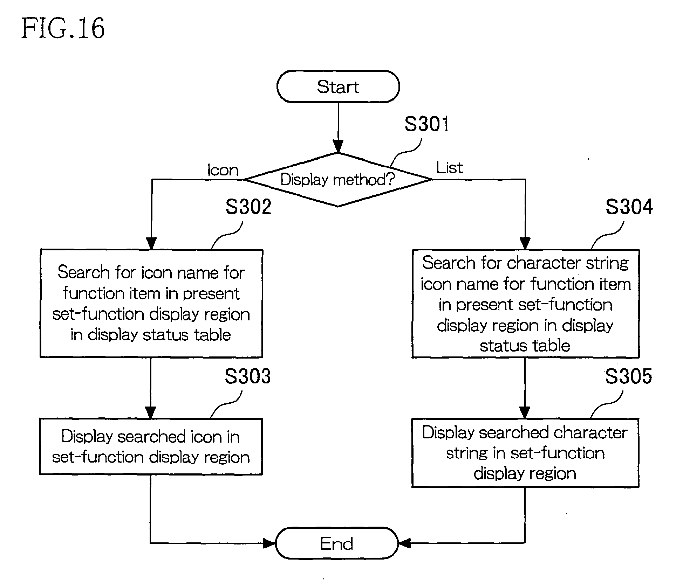

Following is a detailed description of the display control performed by the printer driver set-function display portion 36 for selecting which of the icons and character strings to display in the set-function display region B, with reference to the flowchart in FIG. 16.

When the display control is performed by the printer driver set-function display portion 36, any of the icons and character strings in the set-function display region B can be selectively displayed.

First, when an icon button G1 or a list button G2 above the set-function display region B is selected and pointed by an input operation with the keyboard 14 or the pointing device 15, the pointed icon button G1 or list button G2 is communicated to the printer driver set-function display portion 36 via the data communications portion 31.

When, for example, the icon button G1 is selected and communicated ("Icon" in Step S301), the printer driver set-function display portion 36, referring to the display status table D4 in FIG. 6, reads all of the function item names whose set-function display flags are "Yes", and referring to the icon and character string table D2 in FIG. 4, reads all of the icon link data corresponding to all of the read function items (Step S302). Then, the printer driver set-function display portion 36 displays all of the icons obtained from all of the read link data in the set-function display region B (Step S303). At this time, if function restriction character strings or function restriction icons are set to be displayed in the set-function display region B, the icons obtained from the link data in the function restriction table D5 are also displayed.

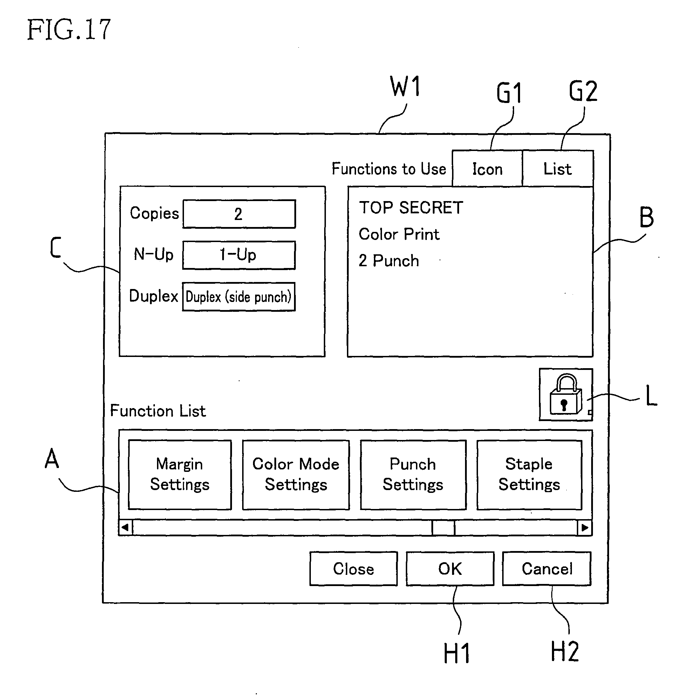

Also, when, for example, the list button G2 is selected and communicated ("List" in Step S301), the printer driver set-function display portion 36, referring to the display status table D4 in FIG. 6, reads all of the function item names whose set-function display flags are "Yes", and referring to the icon and character string table D2 in FIG. 4, reads all of the character strings corresponding to all of the read function items (Step S304). Then, the printer driver set-function display portion 36 displays all of these read character strings in the set-function display region B (Step S305). At this time, if function restriction character strings or function restriction icons are set to be displayed in the set-function display region B, the character strings in the function restriction table D5 are also displayed. FIG. 17 is an example in which character strings are displayed in the set-function display region B.

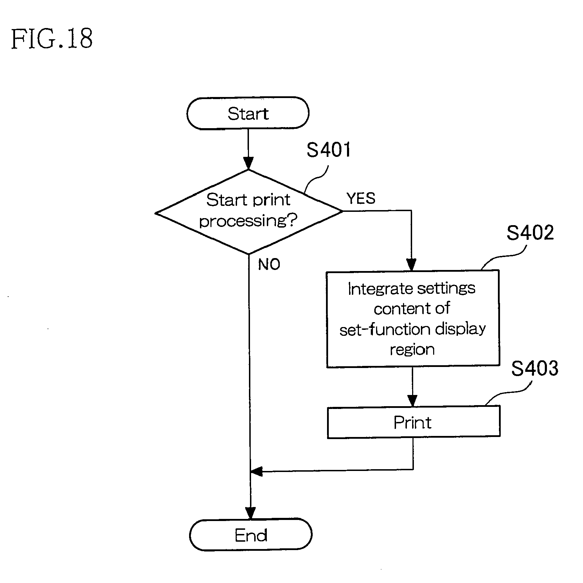

Following is detailed description of a control for executing print processing, with reference to the flowchart in FIG. 18.

Print processing is executed when, after icons or character strings for desired function items are displayed in the set-function display region B by the display control in FIG. 10, and also the icons or character strings are cancelled or modified by the display control in FIG. 12, the start of print processing is pointed.

First, when an OK button H1 below the function-list display region A is pointed by an input operation with the keyboard 14 or the pointing device 15 ("Yes" in Step S401), the fact that the OK button H1 was pointed is communicated to the output data generating portion 32 via the data communications portion 31.

When the fact that the OK button H1 was pointed is communicated, the output data generating portion 32, referring to the display status table D4 in FIG. 6, reads the default values or the user setting values corresponding to the set-function display flags "Yes" (Step S402), and referring to the function restriction table D5 in FIG. 7, reads the default values corresponding to the character strings or the link data, and moreover, obtains respective values and the like that express the content of the print functions that are set in the normal settings region C of the window W1. Then, based on those read default values or the user setting values and the like, the output data generating portion 32 creates print data that can be interpreted in the printer 12, and outputs this print data from the network interface portion 25 to the printer 12 via the network (Step S403).

For example, referring to the display status table D4 in FIG. 6, the function item "Color print" (the default value) and the function item "1 punch" (the user setting value) corresponding to the print functions "Color mode" and "Staple" whose set-function display flags are "Yes" are read (Step S402). Also, referring to the function restriction table D5 in FIG. 7, the function item "Top secret" (the default value) is read. Further, "2 copies" set in the normal settings region C is obtained. Then, print data that can be interpreted in the printer 12 and satisfies "Color print", "1 punch", "Top secret", and "2 copies" is created, and this print data is output to the printer 12. The printer 12 prints the print data in color on recording paper, punches a plurality of printed sheets of recording paper in one location, performs processing for treating the print data or the recording paper as confidential, thereby performing printing for two copies.

If, referring to the display status table D4 in FIG. 6, there are unused values corresponding to set-function display flags "No", these unused values (function items of print functions) may be read and used.

In this way, in the present embodiment, a list of a plurality of icons is displayed in the function-list display region A, and all of the icons are displayed in order by a scrolling operation. Thus, a user can immediately view many icons or indicators, and can know their functions, and whether or not they have been used, can know that they exist. Also, when an icon in the function-list display region A is pointed, the pointed icon is displayed in the set-function display region B, so the functions of set icons can easily be known. Further, for each print function, a default value and a user setting value can be selected and set, and various print functions can be used.

However, in the present embodiment, when performing the display control in FIG. 10, when selecting either the radio button E1 or E2 for the function items in the window W1 in FIG. 8, either the default value or the user setting value is selected from the function table D1 in FIG. 3 in response, but instead, a configuration may be adopted in which when an icon in the function-list display region A is moved to the set-function display region B by a drag-and-drop operation with the pointing device 15, the window W1 in FIG. 8 is omitted, and the default value is uniquely selected from the function table D1 in FIG. 3. Thus, the input operation is simplified.

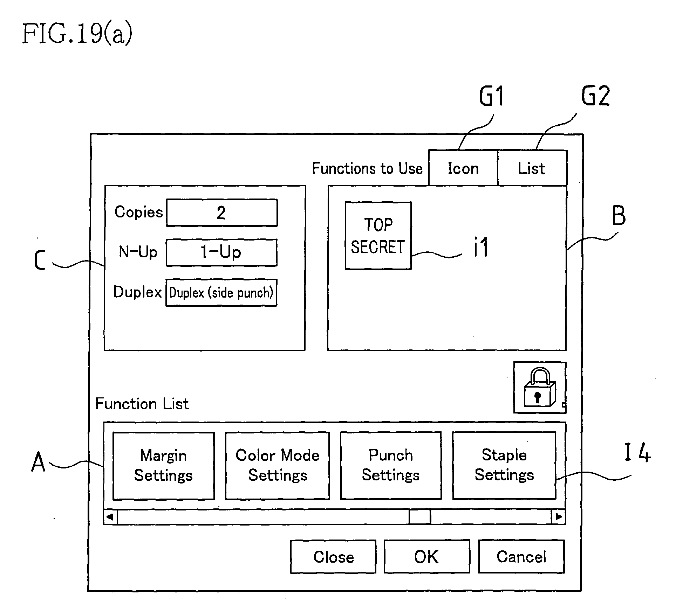

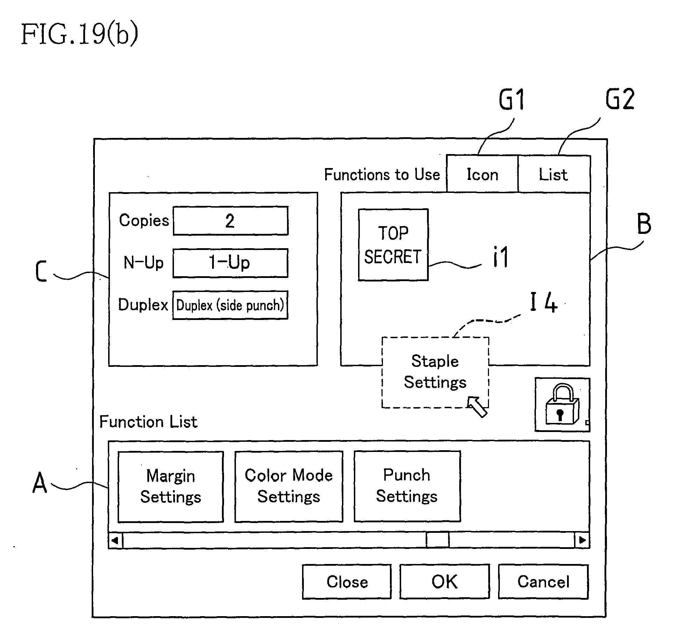

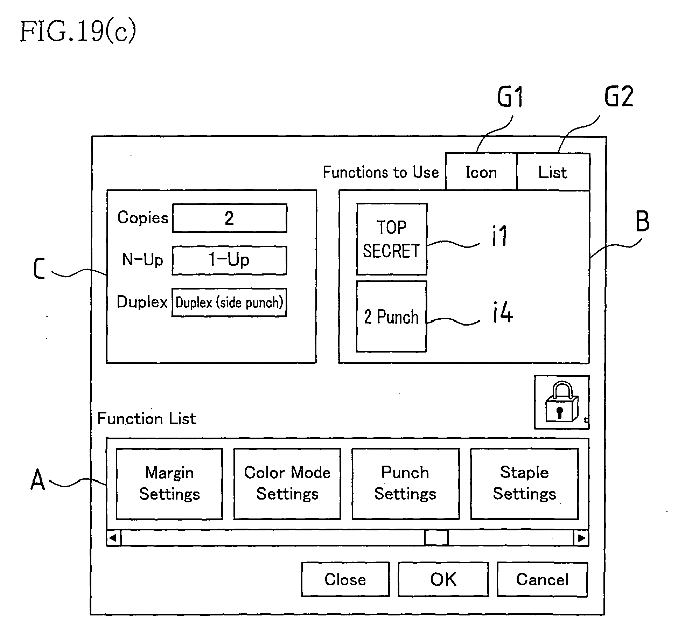

For example, as shown in FIGS. 19(a) to 19(c), when an icon I4 for the print function "Staple" in the function-list display region A is moved to the set-function display region B by a drag-and-drop operation with the pointing device 15, the drag-and-drop operation of the icon I4 is communicated to the printer driver set-function display portion 36 via the data communications portion 31. In response, the printer driver set-function display portion 36, referring to the function table D1 in FIG. 3, selects and reads the default value (the function item "2 punch") from among the default value and the user setting value corresponding to the print function "Staple". Further, referring to the icon and character string table D2 in FIG. 4, the printer driver set-function display portion 36 reads the character string or the link data to the icon corresponding to the read default value (the function item "2 punch"), and displays the character string or the icon obtained from the link data in the set-function display region B. Then, referring to the display status table D4 shown in FIG. 6, the printer driver set-function display portion 36 sets the set-function display flag corresponding to the print function to which the function item of the icon displayed in the set-function display region B belongs to "Yes", and stores the function item (the default value) of the displayed icon in association with the print function.

Also, in the function-list display region A, moving images of icons may be displayed. Thus, it is possible to more clearly inform the user of the functions of the icons. Because icons displayed in the set-function display region B have already been selected, it is not necessary to clearly inform the user of the functions of the icons, and so by displaying still images, reduction in the amount of processing for the display control is achieved.

Also, in the function-list display region A, in response to a scrolling operation, the icons are displayed in motion, but instead, the icons may be always endlessly and repeatedly displayed in motion. Alternatively, instead of the function-list display region A, it is feasible to display a cylinder, dispose many icons on the circumferential face of the cylinder, rotate the cylinder, and always endlessly and repeatedly display the many icons in motion.

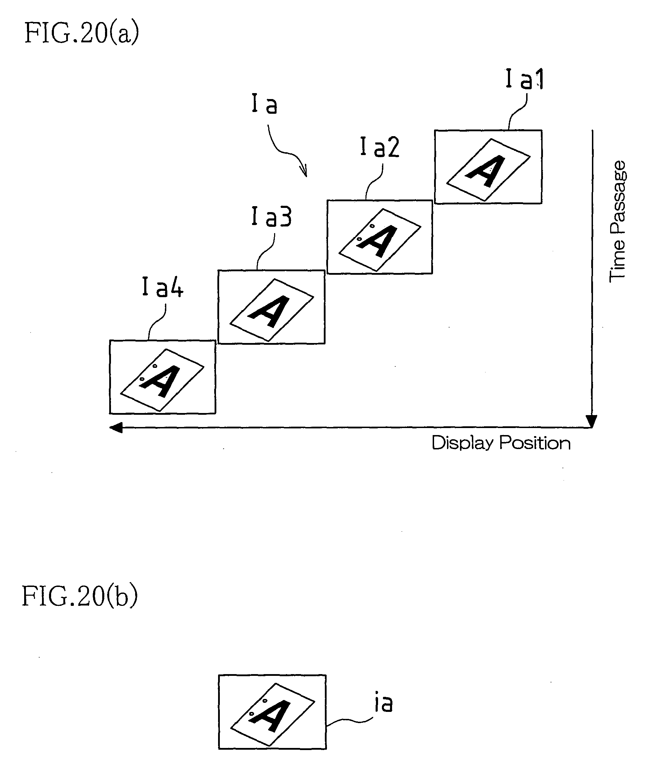

Moreover, a configuration may be adopted in which when the icons are always endlessly and repeatedly displayed in motion, as shown in FIG. 20(a), whenever the moving image of an icon Ia is moved an interval of one frame, frames Ia1, Ia2, Ia3, Ia4 of the moving image of the icon Ia are displayed in order.

When the moving image icon Ia is selected in the function-list display region A, referring to the icon still image table D3 in FIG. 5, a still image icon is set, and the still image icon is displayed in the set-function display region B.

For example, the moving image of icon Ia in FIG. 20(a) expresses the print function "Staple", and the default value of this print function "Staple" is set. In this case, the printer driver set-function display portion 36, referring to the function table D1 in FIG. 3, selects and reads the default value "2 punch" from among the default value and the user setting value corresponding to the print function "Staple". Further, referring to the icon still image table D3 in FIG. 5 in the setting information storage portion 33, a configuration method "4th frame of staple setting moving image" for the still image icon corresponding to the read default value (the function item "2 punch"), i.e., that the fourth frame of the moving image icon is used, is read. Then, the fourth frame Ia4 of that moving image icon Ia is displayed in the set-function display region B as the still image icon ia as shown in FIG. 20(b).

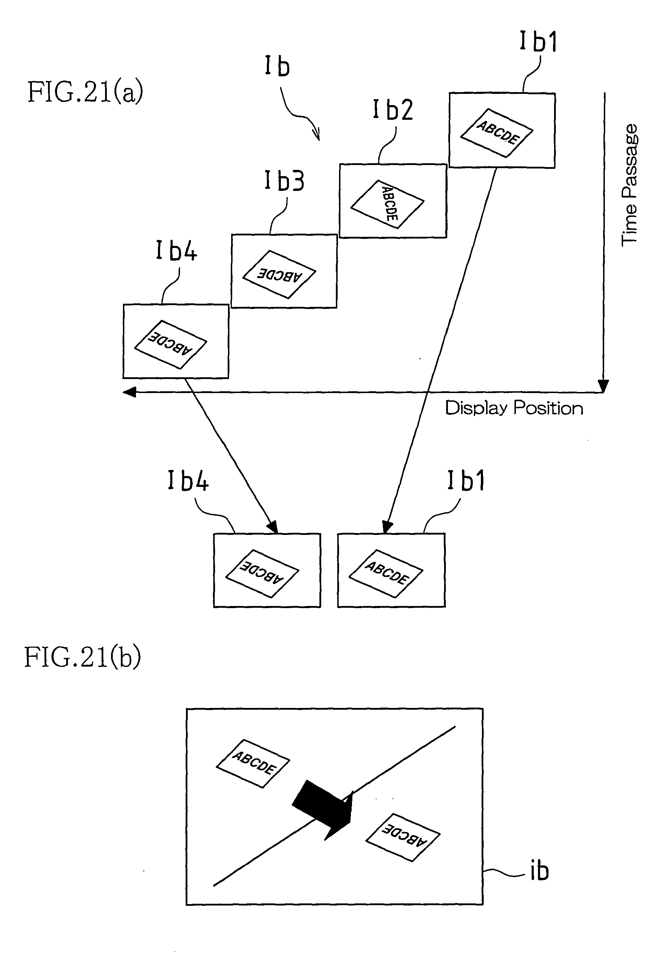

Alternatively, as shown in FIG. 21(a), the moving image of icon Ib expresses the print function "Rotation", and the default value of the print function "Rotation" is set. In this case, the printer driver set-function display portion 36, referring to the function table D1 in FIG. 3, selects and reads the default value "180 degrees rotation" from among the default value and the user setting value corresponding to the print function "rotate", for example. Further, referring to the icon still image table D3 in FIG. 5, a configuration method "combine 1st frame and 4th frame of rotation setting moving image" for the still image icon corresponding to the read default value (function item "180 degrees rotation"), i.e., that the first frame and the fourth frame of the moving image icon are used combined together, is read. Then, a still image in which a first frame Ib1 and a fourth frame Ib4 of that moving image icon Ib are combined is displayed in the set-function display region B as the still image icon ib, as shown in FIG. 21(b). The arrow in FIG. 21(b) represents before/after modification.

Further, in the present embodiment, icons and character strings are displayed, but instead of these, symbols or codes that are function indicators, or a combination thereof may also be displayed.

Also, the icons and character strings in the function-list display region A, and the icons and character strings in the set-function display region B may be the same and express the same function.

The present invention may be embodied in various other forms without departing from the gist or essential characteristics thereof. The embodiments disclosed in this application are to be considered in all respects as illustrative and not limiting. The scope of the invention is indicated by the appended claims rather than by the foregoing description, and all modifications or changes that come within the meaning and range of equivalency of the claims are intended to be embraced therein.

## Claims

1. An interface (30) that displays icons or indicators corresponding to a plurality of functions on a screen (13) and selectively points each icon or indicator on the screen (13), the interface (30) comprising:
a function-list display portion (35) that displays a list of each icon or indicator on the screen (13), and
a set-function display portion (36) that, when an icon or indicator displayed in the list on the screen (13) by the function-list display portion (35) is selectively pointed, separate from the display by the function-list display portion (35), displays the icon or indicator that has been set on the screen (13) according to the pointed icon or indicator.

2. The interface (30) according to claim 1, wherein the function-list display portion (35) displays each icon or indicator on the screen (13) in order repeatedly.

3. The interface (30) according to claim 1, wherein the function-list display portion (35) displays each icon or indicator displayed on the screen (13) in a scrolling manner.

4. The interface (30) according to claim 1, wherein respective values that indicate the content of the function of each icon or indicator are managed, and when an icon or indicator is displayed on the screen (13) by the set-function display portion (36), a value that indicates the content of the function of the displayed icon or indicator is set as an input value.

5. The interface (30) according to claim 4, wherein when deletion of an icon or indicator displayed on the screen (13) by the set-function display portion (36) is pointed, the input value that indicates the content of the function of the pointed icon or indicator is voided.

6. The interface (30) according to claim 4, wherein when modification of the value that indicates the content of the function of an icon or indicator displayed on the screen (13) by the set-function display portion (36) is pointed, the input value that indicates the content of the pointed function is modified.

7. The interface (30) according to claim 4, wherein an unselected value before display by the set-function display portion (36) and a selected default value after display by the set-function display portion (36) are managed as respective values that indicate the content of the function of each icon or indicator.

8. The interface (30) according to claim 4, wherein the default values that indicate the content of the functions of icons or indicators are managed, and when modification of the default value that indicates the content of the function of the icon or indicator is pointed, the default value is modified.

9. The interface (30) according to claim 4, wherein when an icon or indicator is displayed on the screen (13) by the set-function display portion (36) in response to a prescribed input operation, the default value that indicates the content of the function of the displayed icon or indicator is set as the input value.

10. The interface (30) according to claim 4, wherein regardless of whether or not an icon or indicator has been displayed on the screen (13) by the set-function display portion (36), the default value that indicates the content of the function of a prescribed icon or indicator is always set as the input value.

11. The interface (30) according to claim 1, wherein the set-function display portion (36) switches the displayed form of icons or indicators displayed on the screen (13).

12. The interface (30) according to claim 1, wherein an icon or indicator displayed on the screen (13) by the function-list display portion (35) is a moving image, and
an icon or indicator displayed on the screen (13) by the set-function display portion (36) is a still image configured from one frame of the moving image.

13. The interface according to claim 1, wherein an icon or indicator displayed on the screen (13) by the function-list display portion (35) is a moving image, and
an icon or indicator displayed on the screen (13) by the set-function display portion (36) is a still image configured by combining a plurality of frames of the moving image.

14. A print control apparatus that displays icons or indicators corresponding to a plurality of print functions on a screen (13) and selectively points each icon or indicator on the screen (13), the print control apparatus comprising:
a function-list display portion (35) that displays a list of each icon or indicator on the screen (13), and
a set-function display portion (36) that, when an icon or indicator displayed in the list on the screen (13) by the function-list display portion (35) is selectively pointed, separate from the display by the function-list display portion (35), displays the icon or indicator that has been set on the screen (13) according to the pointed icon or indicator.

15. The print control apparatus according to claim 14, wherein printing is pointed using print functions corresponding to icons or indicators displayed on the screen (13) by the set-function display portion (36).
